# EUROPEAN PATENT APPLICATION

(11) **EP 4 671 688 A1**
(43) Date of publication of application: **31.12.2025**
(21) Application number: 24183927.3
(22) Date of filing: 24.06.2024
(51) Int. Cl.: G01C 21/34

(54) **COMPUTER SYSTEM AND METHOD FOR DETERMINING A TRAVEL PLAN FOR AN UPCOMING OR ONGOING MISSION FOR A VEHICLE**

(71) Applicant: Volvo Truck Corporation, 405 08 Göteborg (SE)
(72) Inventor: Chavrier, Philemon, 69008 Lyon (FR); Laperriere, Renaud, 69006 Lyon (FR)
(74) Representative: Valea AB

(57) **Abstract**

The present disclosure relates to a computer system (400) and a computer implemented method for determining a travel plan for an upcoming or on going mission for a vehicle (100). The computer system (400) comprising processing circuitry (402) configured to:

- obtain digital twin (201) data from a digital twin of the vehicle, wherein the digital twin data comprises energy consumption data for the vehicle from the starting point to the end point and in any load conditions;

- obtain current vehicle data (202) comprising vehicle load, vehicle configuration, vehicle accessory installed, accessory energy consumption or vehicle aerodynamics;

- obtain map data (203) for an area covering the mission;

- based on the map data, determine a plurality of candidate routes (204) for the vehicle to take from the starting point to the end point;

- determine the energy consumption (205) of the vehicle for each of the candidate routes based on the digital twin data and the current vehicle data;

- compare the energy consumption for each candidate routes (206); and to

- based on a result of the comparison, determine the travel plan (207) for the mission to be the candidate route having the lowest energy consumption.

## Description

### TECHNICAL FIELD

The disclosure relates generally to a computer system, a computer-implemented method, a vehicle, a computer program product and a non-transitory computer-readable storage medium. In particular aspects, the disclosure relates to determining a travel plan for an upcoming or on going mission for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Nowadays, it is key for vehicles to be as energy efficient as possible. This is valid for vehicles run by a combustion engine, for hybrid vehicles comprising both a combustion engine and an electric machine, and for purely electric vehicles. Taking the optimal road is one parameter that may influence the energy efficiency for a vehicle.

There is a strive to improve energy efficiency for a vehicle.

### SUMMARY

According to a first aspect of the disclosure, a computer system for determining a travel plan for an upcoming or ongoing mission for a vehicle is provided. The mission has a starting point and an end point. The computer system comprises processing circuitry configured to:
- obtain digital twin data from a digital twin of the vehicle, wherein the digital twin data comprises energy consumption data for the vehicle from the starting point to the end point and in any load conditions;
- obtain current vehicle data, wherein the current vehicle data comprises at least one of: vehicle load, vehicle configuration, vehicle accessory installed, accessory energy consumption and vehicle aerodynamics;
- obtain map data for an area covering the mission;
- based on the map data, determine a plurality of candidate routes for the vehicle to take from the starting point to the end point;
- determine the energy consumption of the vehicle for each of the candidate routes based on the digital twin data and the current vehicle data;
- compare the energy consumption for each candidate routes; and to
- based on a result of the comparison, determine the travel plan for the mission to be the candidate roue having the lowest energy consumption.

The first aspect of the disclosure may seek to improve energy consumption by a vehicle. A technical benefit may include that energy consumption in the vehicle is improved. When the travel plan for the mission is determined to be the candidate route having the lowest energy consumption, the energy consumption by the vehicle is improved in that it uses as little energy as possible for the upcoming or ongoing mission.

Optionally in some examples, including in at least one preferred example, the energy consumption of the vehicle for each of the candidate routes may be determined by taking regeneration energy into account. The travel plan for the mission may be determined to be the candidate roue having the lowest energy consumption and the highest regeneration energy. A technical benefit may include that energy consumption in the vehicle is improved. When the regeneration energy is taken into account, the energy consumption by the vehicle is improved in that it uses as little energy as possible for the upcoming or ongoing mission and also regenerates as much energy as possible.

Optionally in some examples, including in at least one preferred example, the regeneration energy may be taken into account when the vehicle is a Battery Electric Truck (BET). A BET is at least partly driven by energy from a battery which is arranged to be recharged when driving, for example downhill. When this regeneration energy is taken into account, the energy consumption by the vehicle is improved.

Optionally in some examples, including in at least one preferred example, the energy consumption of the vehicle for each of the candidate routes may be determined by taking at least one or both of weather data and temperature data into account. The travel plan for the mission may be determined to be the candidate roue having the lowest energy consumption and the lowest influence by weather data and temperature data. Weather and temperature may affect the vehicle's energy consumption. For example, headwinds and rain may increase the energy consumption and determining the travel plan to be the candidate route having weather and temperature that influence the energy consumption as little as possible is desirable. A technical benefit may include that the energy consumption by the vehicle is improved.

Optionally in some examples, including in at least one preferred example, the processing circuitry may be further configured to continuously update the digital twin of the vehicle by inputting the current vehicle data to the digital twin. Thus, the digital twin may be trained using the current vehicle data. A technical benefit may include the accuracy of the digital twin is increased when it receives the current vehicle data since it will be based on more data than the previous time it was trained. Continuously updating the digital twin ensures that it is not outdated and that it provides digital twin data that is as updated as possible. Since the digital twin is continuously updated, the candidate route may be determined using as updated data as possible which improves the vehicle's energy consumption.

Optionally in some examples, including in at least one preferred example, the processing circuitry may be further configured to provide information indicating determined travel plan to a user interface. A technical benefit may include that the travel plan is easily accessible by a user, for example a driver of the vehicle. The user may then be provided with the possibility to follow the determined travel plan and/or to make any adjustments to the travel plan according to his/hers preferences.

According to a second aspect of the disclosure, a vehicle comprising the computer system of the first aspect is provided. The second aspect of the disclosure may seek to improve energy consumption by a vehicle. A technical benefit may include that energy consumption by the vehicle is improved. Technical benefits of the second aspect are analogous to the technical benefits of the first aspect.

According to a third aspect of the disclosure, a computer-implemented method for determining a travel plan for an upcoming or on going mission for a vehicle is provided. The method comprising:
- obtaining, by processing circuitry of a computer system, digital twin data from a digital twin of the vehicle, wherein the digital twin data comprises energy consumption data for the vehicle from the starting point to the end point and in any load conditions;
- obtaining, by the processing circuitry, current vehicle data, wherein the current vehicle data comprises at least one of: vehicle load, vehicle configuration, vehicle accessory installed, accessory energy consumption and vehicle aerodynamics;
- obtaining, by the processing circuitry, map data for an area covering the mission;
- based on the map data, determining, by the processing circuitry, a plurality of candidate routes for the vehicle to take from the starting point to the end point;
- determining, by the processing circuitry, the energy consumption by the vehicle for each of the candidate routes based on the digital twin data and the current vehicle data;
- comparing, by the processing circuitry, the energy consumption for each candidate routes; and
- based on a result of the comparison, determining, by the processing circuitry, the travel plan for the mission to be the candidate roue having the lowest energy consumption.

The third aspect of the disclosure may seek to improve energy consumption by a vehicle. A technical benefit may include that energy consumption by the vehicle is improved. Technical benefits of the third aspect are analogous to the technical benefits of the first and second aspects.

Optionally in some examples, including in at least one preferred example, the energy consumption by the vehicle for each of the candidate routes may be determined by taking regeneration energy into account. The travel plan for the mission may be determined to be the candidate roue having the lowest energy consumption and the highest regeneration energy. A technical benefit may include that energy consumption in the vehicle is improved. When the regeneration energy is taken into account, the energy consumption by the vehicle is improved in that it uses as little energy as possible for the upcoming or ongoing mission and also regenerates as much energy as possible.

Optionally in some examples, including in at least one preferred example, the regeneration energy may be taken into account when the vehicle is a BET. A BET is at least partly driven by energy from a battery which is arranged to be recharged when driving, for example downhill. When this regeneration energy is taken into account, the energy consumption by the vehicle is improved.

Optionally in some examples, including in at least one preferred example, the energy consumption of the vehicle for each of the candidate routes may be determined by taking at least one or both of weather data and temperature data into account. The travel plan for the mission may be determined to be the candidate roue having the lowest energy consumption and the lowest influence by weather data and temperature data. Weather and temperature may affect the vehicle's energy consumption. For example, headwinds and rain may increase the energy consumption and determining the travel plan to be the candidate route having weather and temperature that influence the energy consumption as little as possible is desirable. A technical benefit may include that the energy consumption by the vehicle is improved.

Optionally in some examples, including in at least one preferred example, the method may comprise:
- continuously updating, by the processing circuitry, the digital twin of the vehicle by inputting the current vehicle data to the digital twin.
Thus, the digital twin may be trained using the current vehicle data. A technical benefit may include the accuracy of the digital twin is increased when it receives the current vehicle data since it will be based on more data than the previous time it was trained. Continuously updating the digital twin ensures that it is not outdated and that it provides digital twin data that is as updated as possible. Since the digital twin is continuously updated, the candidate route may be determined using as updated data as possible which improves the vehicle's energy consumption.

Optionally in some examples, including in at least one preferred example, the method may comprise:
- providing, by the processing circuitry, information indicating determined travel plan to a user interface.
A technical benefit may include that the travel plan is easily accessible by a user, for example a driver of the vehicle. The user may then be provided with the possibility to follow the determined travel plan and/or to make any adjustments to the travel plan according to his/hers preferences.

According to a fourth aspect of the disclosure, a computer program product is provided. The computer program product comprises program code for performing, when executed by a processing circuitry, the method of the third aspect. The fourth aspect of the disclosure may seek to improve energy consumption by a vehicle. A technical benefit may include that energy consumption by the vehicle is improved. Technical benefits of the fourth aspect are analogous to the technical benefits of the first, second and third aspects.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect. The fifth aspect of the disclosure may seek to improve energy consumption by a vehicle. A technical benefit may include that energy consumption by the vehicle is improved. Technical benefits of the fifth aspect are analogous to the technical benefits of the first, second, third and fourth aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle according to an example.
**FIG. 2** is a flow chart illustrating a method according to an example.
**FIG. 3** is an exemplary drawing illustrating vehicles and three candidate routes according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Nowadays, it is key to have a vehicle that is as energy efficient as possible, and the vehicle also needs to take the best route to optimize the energy efficiency. With the shift to Battery electric Trucks (BET), it is even more important linked to battery limited autonomy. Thus, it is a strive to optimize the final energy consumption and not only the vehicle's energy efficiency. One challenge is that the vehicle's navigation system performs travel planning based on shortest or fastest route only but not with the best energy efficiency route according to the vehicle configuration as the navigation system doesn't know the detail vehicle configuration. Thus, there is a strive to improve energy efficiency for a vehicle.

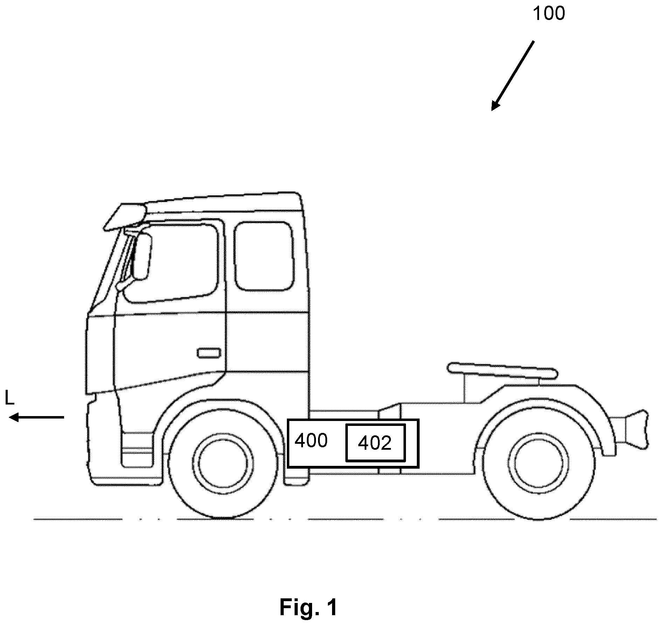

**FIG. 1** is an exemplary drawing illustrating a vehicle **100,** according to an example. The vehicle **100** may be any heavy-duty vehicle, such as truck, bus, passenger car, and construction equipment, such as an excavator, a wheel loader, etc., among other vehicle types. The vehicle **100** may be a truck for towing one or more trailers (not shown). Although the disclosure may be described with respect to a particular vehicle, the disclosure is not restricted to any particular vehicle.

The vehicle **100** may be at least partly operated by a user, e.g. a driver (not shown in **FIG. 1**). The vehicle **100** may be a manually operated vehicle or an at least partly autonomously operated vehicle, i.e., it may be a vehicle comprising autonomous driving capabilities. The vehicle **100** may be a fully electric vehicle, a hybrid vehicle or it may be driven using only a combustion engine. As such, the vehicle **100** may comprise one or more electric motors/generators and/or an internal combustion engine (not shown) for driving the vehicle **100.**

The vehicle **100** has a longitudinal direction **L** which corresponds to the travel direction of the vehicle **100.** The longitudinal direction **L** is parallel to the ground.

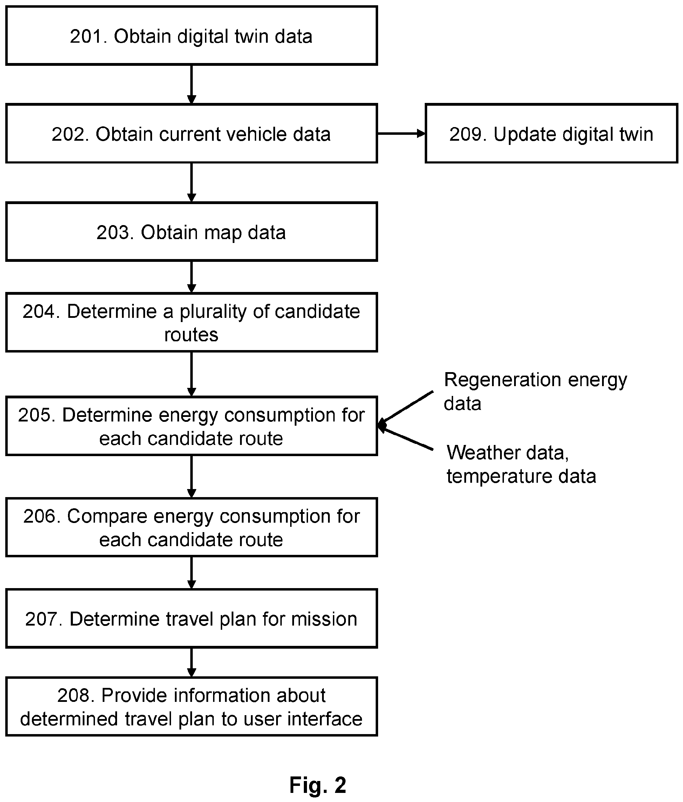

**FIG. 2** is a flow chart illustrating a method for determining a travel plan for an upcoming or on going mission for a vehicle **100**, according to an example. In other words, the method provides adaptive navigation for the vehicle **100.** The mission comprises a starting point and an end point. The mission may comprise one or more intermediate points. The method may be performed by a computer system **400** or a processing circuitry **402** comprised in the computer system **400.** The method comprises at least one of the following steps, which steps may be performed in any suitable order than described below:

Step **201:** Digital twin data is obtained from a digital twin of the vehicle **100.** The digital twin data comprises energy consumption data for the vehicle **100** from the starting point to the end point and in any load conditions of the vehicle **100.** In other words, the digital twin creates energy consumption data which is an accurate prediction of the energy consumption of the physical vehicle **100.**

Prior to step 201, the digital twin has been created and trained using training data. The training data may comprise historic data, real-time data from the vehicle **100**, real-time data from other vehicles etc. The training of the digital twin may be done prior to step 201, it may be done continuously at any suitable time during execution of the method in **FIG. 2****.**

A digital twin is a virtual representation of a physical entity, for example a digital twin of the vehicle **100** is a virtual representation of the physical vehicle 100. The digital twin imitates the characteristics and behavior of the real-world vehicle **100.** The digital twin is based on real-time data, e.g. real-time data indicating the energy consumption of the vehicle 100. A digital twin offers real-time monitoring, which is not offered by regular computational models. The digital twin is dynamically updated, see step **209** below, using real-time data and historic data, while regular computational models do not have any dynamic interactivity and do not use real-time data. The digital twin of the vehicle **100** reflects the current energy consumption of the vehicle 100.

Step **202:** Current vehicle data is obtained. The current vehicle data comprises at least one of: vehicle load currently loaded on the vehicle **100**, vehicle configuration currently installed in the vehicle, vehicle accessory currently installed in the vehicle **100**, accessory energy consumption currently consumed by the assessor installed in the vehicle 100 and current vehicle aerodynamics of the vehicle **100.** Vehicle configuration may be referred to as vehicle type, for example BET, Internal combustion engine Truck (ICET) etc. The current vehicle data may be provided to the digital twin, i.e. the digital twin may be updated with the current vehicle data. The current vehicle data may be obtained from an onboard memory unit, an offboard memory unit, a cloud memory or any other suitable unit arranged to provide current vehicle data. The current vehicle data may be obtained upon request by the processing circuitry **402**, it may be obtained at regular time intervals, it may be automatically obtained without any request or in any other suitable fashion.

Step **203:** Map data for an area covering the mission is obtained. The area covering the mission covers the starting point and the end point. The map data may be obtained upon request by the processing circuitry **402**, it may be obtained at regular time intervals, it may be automatically obtained without any request or in any other suitable fashion. The map data may be obtained from the vehicle's navigation system, from an onboard map memory, an offboard memory unit, a cloud memory, or any other suitable entity arranged to provide map data. The map data may comprise geographical coordinates representing the area covering the mission. The map data may comprise parameters such as traffic information, time information, user preferences etc.

Step **204:** Based on the map data, a plurality of candidate routes for the vehicle 100 to take from the starting point to the end point are determined. There may be *n* number of candidate routes that are determined, where *n* is a positive integer larger than 1. A candidate route may be an alternative route for the vehicle **100** to take from the starting point to the end point. One candidate route may be the route with the shortest distance, another route may be the route having less traffic, another route may be the route with the highest number of energy fueling stations, just to mention some examples. Each of the plurality of candidate routes may be represented by navigation information for each route.

Step **205:** The energy consumption of the vehicle **100** for each of the candidate routes is determined based on the digital twin data and the current vehicle data. This may be determined by inputting the current vehicle data into the digital twin of the vehicle, and the output of the digital twin comprises an indication of the energy consumption for each of the candidate routes. The map data and/or information about each candidate route may be inputted into the digital twin. The energy consumption may be represented by a number of kWh, liters of gasoline, liters of diesel etc. that the vehicle **100** will consume for each candidate route.

The energy consumption of the vehicle **100** for each of the candidate routes may be determined by taking regeneration energy into account. Regeneration energy may comprise capture kinetic energy that is lost during, for example braking and converting it to electric energy which may be stored in the vehicle battery. Regeneration energy may be taken into account by analyzing each candidate route with respect to a number of parameters such as downhill parts, hilly terrain, urban vs. highway parts, traffic congestion, the user's driving style and preferences, just to mention some examples.

The energy consumption of the vehicle **100** for each of the candidate routes may be determined by taking at least one or both of: weather data and temperature data into account. The weather data and temperature data may be obtained from a weather and temperature database, from a weather and temperature sensor onboard or offboard the vehicle **100**, or from any other suitable entity arranged to provide weather data and temperature data. The weather data may indicate a weather type that the vehicle **100** may experience when traveling each of the candidate routes, for example rain, snow, headwinds etc. The temperature data may indicate the temperature that the vehicle **100** may experience when traveling each of the candidate routes. Weather and temperature may influence the energy consumption of the vehicle **100.** For example, headwinds require the vehicle **100** to consume more energy to maintain a certain speed compared to no wind, rain or snow on the road may increase energy consumption because of increased resistance against the tires etc. Different vehicle types, e.g. BET and ICET may have different degrees of sensitivity when it comes to weather and temperature. A BET is far more sensitive than ICET to low temperature with respect to energy efficiency.

Step **206:** The energy consumption for each candidate route is compared to each other. One purpose of the comparison is to determine which candidate route has the lowest energy consumption compared to the others.

Step **207:** Based on a result of the comparison, the travel plan for the mission to be the candidate roue having the lowest energy consumption is determined. The travel plan is for the upcoming or ongoing mission of the vehicle **100** and comprises information on how to travel from the starting point to the end point in the most fuel efficient way and taking the current vehicle data into account, e.g. geographical information describing the route from the starting point to the end point.

The travel plan for the mission may be determined to be the candidate roue having the lowest energy consumption and the highest regeneration energy. A candidate route that has both the lowest energy consumption and the highest regeneration energy may be a route that has the optimal mix of terrain, traffic conditions and vehicle dynamics to minimize the energy consumption while maximizing the regeneration energy.

The regeneration energy may be taken into account when the vehicle **100** is a BET.

The travel plan for the mission may be determined to be the candidate roue having the lowest energy consumption and the lowest influence by weather data and temperature data.

Step **208:** Information indicating the determined travel plan may be provided to a user interface. The user interface may be for example a display onboard the vehicle **100**, a display offboard the vehicle **100**, an audio user interface, a tactile interface, just to mention some examples. The information indicating the determined travel plan may be in the form of a map where the travel plan is highlighted or marked, a textual or audio list of driving directions for the travel plan etc.

Step **209:** The digital twin of the vehicle 100 may be continuously updated by inputting the current vehicle data to the digital twin. The digital twin may be continuously updated by continuously receiving data from its physical counterpart, i.e. the physical vehicle **100.** In addition to using current vehicle data as input to the update of the digital twin, other data may be used for the update such as the determined travel plan, the determined energy consumption, map data, historic vehicle data etc. Output from the digital twin may be used as input to the digital twin with the purpose of updating, further improving and refining the digital twin, i.e. there is a feedback loop.

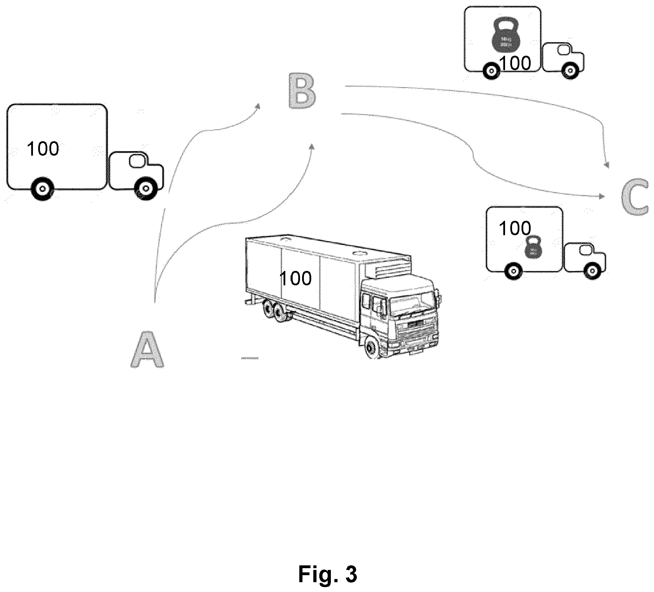

**FIG. 3** is an exemplary drawing illustrating vehicles and three candidate routes according to an example. As mentioned above, based on digital twin knowledge, current vehicle data, e.g. load, vehicle configuration, map information etc. it is possible to plan the best energy efficient travel plan.

For a mission with starting point A and end point B, as seen in **FIG. 3**, the digital twin knows the exact energy consumption between the two types of vehicles **100** and this will give two different candidate routes.

For a mission with starting point B and end point C, as seen in **FIG. 3**, the digital twin knows the exact energy consumption between the same vehicle with two different load cases and this will give two different candidate routes.

As mentioned above, the potential regeneration energy may be taken into account when determining the travel plan. If the vehicle 100 is a BET, it is not bad to have a hilly up & down configuration of the route as the BET will recover energy while going down whereas on a vehicle **100** that is an ICET, it is a complete waste because regenerating energy is not possible.

Referring back to **FIG. 1** which is an exemplary drawing illustrating a vehicle 100, according to an example. The vehicle **100** comprises a computer system **400** for determining a travel plan for an upcoming or on going mission for a vehicle **100.** The mission comprises a starting point and an end point.

The computer system **400** comprises processing circuitry **402** configured to obtain digital twin data from a digital twin of the vehicle 100l. The digital twin data comprises energy consumption data for the vehicle **100** from the starting point to the end point and in any load conditions.

The processing circuitry **402** is configured to obtain current vehicle data. The current vehicle data comprises at least one of: vehicle load, vehicle configuration, vehicle accessory installed, accessory energy consumption and vehicle aerodynamics.

The processing circuitry **402** is configured to obtain map data for an area covering the mission.

The processing circuitry **402** is configured to, based on the map data, determine a plurality of candidate routes for the vehicle **100** to take from the starting point to the end point.

The processing circuitry **402** is configured to determine the energy consumption of the vehicle 100 for each of the candidate routes based on the digital twin data and the current vehicle data. The energy consumption of the vehicle **100** for each of the candidate routes may be determined by taking regeneration energy into account. **T**he energy consumption of the vehicle **100** for each of the candidate routes may be determined by taking at least one or both of weather data and temperature data into account,

The processing circuitry **402** is configured to compare the energy consumption for each candidate route.

The processing circuitry **402** is configured to, based on a result of the comparison, determine the travel plan for the mission to be the candidate roue having the lowest energy consumption. The travel plan for the mission may be determined to be the candidate roue having the lowest energy consumption and the highest regeneration energy. **T**he regeneration energy may be taken into account when the vehicle **100** is a BET. **T**he travel plan for the mission may be determined to be the candidate roue having the lowest energy consumption and the lowest influence by weather data and temperature data.

The processing circuitry **402** may be further configured to continuously update the digital twin of the vehicle **100** by inputting the current vehicle data to the digital twin.

The processing circuitry **402** may be further configured to provide information indicating the determined travel plan to a user interface.

A computer program product comprises program code for performing, when executed by the processing circuitry 402, at least part of the method illustrated in **FIG. 2****.**

A non-transitory computer-readable storage medium comprising instructions, which when executed by a processing circuitry n, cause the processing circuitry **402** to perform at least part of the method illustrated in **FIG. 2****.**

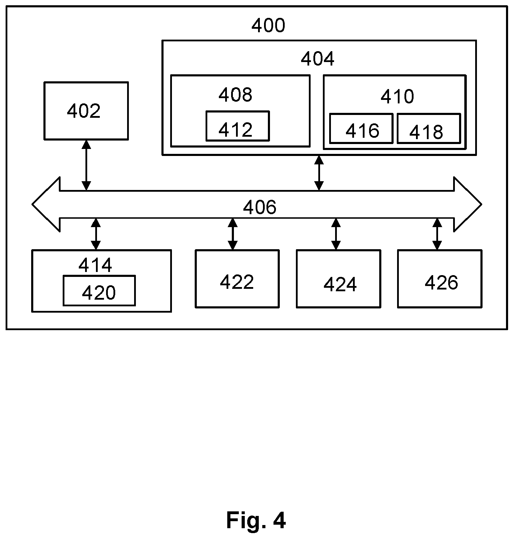

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404**, and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410b** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414**, which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below are a number of examples. The examples may be combined with any other example, method, or step above, in any suitable manner.

**Example 1:** A computer system (400) for determining a travel plan for an upcoming or on going mission for a vehicle (100), wherein the mission comprises a starting point and an end point, the computer system (400) comprising processing circuitry (402) configured to:
- obtain digital twin data from a digital twin of the vehicle (100), wherein the digital twin data comprises energy consumption data for the vehicle (100) from the starting point to the end point and in any load conditions;
- obtain current vehicle data, wherein the current vehicle data comprises at least one of: vehicle load, vehicle configuration, vehicle accessory installed, accessory energy consumption and vehicle aerodynamics;
- obtain map data for an area covering the mission;
- based on the map data, determine a plurality of candidate routes for the vehicle (100) to take from the starting point to the end point;
- determine the energy consumption of the vehicle (100) for each of the candidate routes based on the digital twin data and the current vehicle data;
- compare the energy consumption for each candidate routes; and to
- based on a result of the comparison, determine the travel plan for the mission to be the candidate roue having the lowest energy consumption.

**Example 2:** The computer system (400) of example 1, wherein the energy consumption of the vehicle (100) for each of the candidate routes is determined by taking regeneration energy into account, and wherein the travel plan for the mission is determined to be the candidate roue having the lowest energy consumption and the highest regeneration energy.

**Example 3:** The computer system (400) of example 2, wherein the regeneration energy is taken into account when the vehicle (100) is a BET.

**Example 4:** The computer system (400) of any of examples 2-3, wherein the regeneration energy is not taken into account when the vehicle (100) is an ICET.

**Example 5:** The computer system (400) of any of examples 1-4, wherein the energy consumption of the vehicle (100) for each of the candidate routes is determined by taking at least one or both of weather data and temperature data into account, and wherein the travel plan for the mission is determined to be the candidate roue having the lowest energy consumption and the lowest influence by weather data and temperature data.

**Example 6:** The computer system (400) of any of examples 1-5, wherein the processing circuitry (402) is further configured to:
- continuously update the digital twin of the vehicle (100) by inputting the current vehicle data to the digital twin.

**Example 7:** The computer system (400) of any of examples 1-6, wherein the processing circuitry (402) is further configured to:
- provide information indicating the determined travel plan to a user interface.

**Example 8:** The computer system (400) of any of examples 1-4, wherein the digital twin is continuously updated by inputting at least one of the following to the digital twin: map data, the plurality of candidate routes, determined energy consumption, the determined travel plan.

**Example 9:** The computer system (400) of any of examples 1-8, wherein the digital twin has been trained using historic vehicle data.

**Example 10:** A vehicle (100) comprising the computer system (400) of any of examples 1-9.

**Example 11:** A computer-implemented method for determining a travel plan for an upcoming or ongoing mission for a vehicle (100), wherein the mission comprises a starting point and an end point; the method comprising:
- obtaining (201), by processing circuitry (402) of a computer system (400), digital twin data from a digital twin of the vehicle (100), wherein the digital twin data comprises energy consumption data for the vehicle (100) from the starting point to the end point and in any load conditions;
- obtaining (202), by the processing circuitry (402), current vehicle data, wherein the current vehicle data comprises at least one of: vehicle load, vehicle configuration, vehicle accessory installed, accessory energy consumption and vehicle aerodynamics;
- obtaining (203), by the processing circuitry (402), map data for an area covering the mission;
- based on the map data, determining (204), by the processing circuitry (402), a plurality of candidate routes for the vehicle (100) to take from the starting point to the end point;
- determining (205), by the processing circuitry (402), the energy consumption of the vehicle (100) for each of the candidate routes based on the digital twin data and the current vehicle data;
- comparing (206), by the processing circuitry (402), the energy consumption for each candidate routes; and
- based on a result of the comparison, determining (207), by the processing circuitry (402), the travel plan for the mission to be the candidate roue having the lowest energy consumption.

**Example 12:** The method of example 11, wherein the energy consumption of the vehicle (100) for each of the candidate routes is determined by taking regeneration energy into account, and wherein the travel plan for the mission is determined to be the candidate roue having the lowest energy consumption and the highest regeneration energy.

**Example 13:** The method of example 12, wherein the regeneration energy is taken into account when the vehicle (100) is a BET.

**Example 14:** The method of any of examples 12-13, wherein the regeneration energy is not taken into account when the vehicle (100) is an ICET.

**Example 15:** The method of any of examples 11-14, wherein the energy consumption of the vehicle (100) for each of the candidate routes is determined by taking at least one or both of weather data and temperature data into account, and wherein the travel plan for the mission is determined to be the candidate roue having the lowest energy consumption and the lowest influence by weather data and temperature data.

**Example 16:** The method of any of examples 11-15, comprising:
- continuously updating (209), by the processing circuitry (402), the digital twin of the vehicle (100) by inputting the current vehicle data to the digital twin.

**Example 17:** The method of any of examples 11-16, comprising:
- providing (208), by the processing circuitry (402), information indicating the determined travel plan to a user interface.

**Example 18:** The method of any of examples 11-17, wherein the digital twin is continuously updated by inputting at least one of the following to the digital twin: map data, the plurality of candidate routes, determined energy consumption, the determined travel plan.

**Example 19:** A computer program product comprising program code for performing, when executed by a processing circuitry (402), the method of any of examples 11-18.

**Example 20:** A non-transitory computer-readable storage medium comprising instructions, which when executed by a processing circuitry (402), cause the processing circuitry (402) to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) for determining a travel plan for an upcoming or on going mission for a vehicle (100), wherein the mission comprises a starting point and an end point, the computer system (400) comprising processing circuitry (402) configured to:
obtain digital twin data from a digital twin of the vehicle (100), wherein the digital twin data comprises energy consumption data for the vehicle (100) from the starting point to the end point and in any load conditions;
obtain current vehicle data, wherein the current vehicle data comprises at least one of: vehicle load, vehicle configuration, vehicle accessory installed, accessory energy consumption and vehicle aerodynamics;
obtain map data for an area covering the mission;
based on the map data, determine a plurality of candidate routes for the vehicle (100) to take from the starting point to the end point;
determine the energy consumption of the vehicle (100) for each of the candidate routes based on the digital twin data and the current vehicle data;
compare the energy consumption for each candidate routes; and to
based on a result of the comparison, determine the travel plan for the mission to be the candidate roue having the lowest energy consumption.

2. The computer system (400) of claim 1, wherein the energy consumption of the vehicle (100) for each of the candidate routes is determined by taking regeneration energy into account, and
wherein the travel plan for the mission is determined to be the candidate roue having the lowest energy consumption and the highest regeneration energy.

3. The computer system (400) of any of claims 1-2, wherein the regeneration energy is taken into account when the vehicle (100) is a Battery Electric Truck, BET.

4. The computer system (400) of any of claims 1-3, wherein the energy consumption of the vehicle (100) for each of the candidate routes is determined by taking at least one or both of weather data and temperature data into account,
wherein the travel plan for the mission is determined to be the candidate roue having the lowest energy consumption and the lowest influence by weather data and temperature data.

5. The computer system (400) of any of claims 1-4, wherein the processing circuitry (402) is further configured to:
continuously update the digital twin of the vehicle (100) by inputting the current vehicle data to the digital twin.

6. The computer system (400) of any of claims 1-5, wherein the processing circuitry (402) is further configured to:
provide information indicating the determined travel plan to a user interface.

7. A vehicle (100) comprising the computer system (400) of any of claims 1-6.

8. A computer-implemented method for determining a travel plan for an upcoming or on going mission for a vehicle (100), wherein the mission comprises a starting point and an end point;
the method comprising:
*obtaining* (201), by processing circuitry (402) of a computer system (400), digital twin data from a digital twin of the vehicle (100), wherein the digital twin data comprises energy consumption data for the vehicle (100) from the starting point to the end point and in any load conditions;
*obtaining* (202), by the processing circuitry (402), current vehicle data, wherein the current vehicle data comprises at least one of: vehicle load, vehicle configuration, vehicle accessory installed, accessory energy consumption and vehicle aerodynamics;
*obtaining* (203), by the processing circuitry (402), map data for an area covering the mission;
based on the map data, *determining* (204), by the processing circuitry (402), a plurality of candidate routes for the vehicle (100) to take from the starting point to the end point;
*determining* (205), by the processing circuitry (402), the energy consumption of the vehicle (100) for each of the candidate routes based on the digital twin data and the current vehicle data;
*comparing* (206), by the processing circuitry (402), the energy consumption for each candidate routes; and
based on a result of the comparison, *determining* (207), by the processing circuitry (402), the travel plan for the mission to be the candidate roue having the lowest energy consumption.

9. The method of claim 8, wherein the energy consumption of the vehicle (100) for each of the candidate routes is determined by taking regeneration energy into account, and
wherein the travel plan for the mission is determined to be the candidate roue having the lowest energy consumption and the highest regeneration energy.

10. The method of claim 9, wherein the regeneration energy is taken into account when the vehicle (100) is a Battery Electric Truck, BET.

11. The method of any of claims 8-10, wherein the energy consumption of the vehicle (100) for each of the candidate routes is determined by taking at least one or both of weather data and temperature data into account,
wherein the travel plan for the mission is determined to be the candidate roue having the lowest energy consumption and the lowest influence by weather data and temperature data.

12. The method of claim 11, comprising:
*continuously updating* (209), by the processing circuitry (402), the digital twin of the vehicle (100) by inputting the current vehicle data to the digital twin.

13. The method of any of claims 8-12, comprising:
*providing* (208), by the processing circuitry (402), information indicating the determined travel plan to a user interface.

14. A computer program product comprising program code for performing, when executed by a processing circuitry (402), the method of any of claims 8-13.

15. A non-transitory computer-readable storage medium comprising instructions, which when executed by a processing circuitry (402), cause the processing circuitry (402) to perform the method of any of claims 8-13.
